# EUROPÄISCHE PATENTSCHRIFT

(11) **EP 1 466 392 B1**
(45) Veröffentlichungstag und Bekanntmachung des Hinweises auf die Patenterteilung: **26.10.2005**
(21) Anmeldenummer: 02791848.1
(22) Anmeldetag: 18.12.2002
(51) Int. Cl.: H01S 3/0941

(54) **VORRICHTUNG UND VERFAHREN ZUR OPTISCHEN ANREGUNG VON LASERAKTIVEN KRISTALLEN MIT POLARISATIONSABHÄNGIGER ABSORPTION**
DEVICE AND METHOD FOR OPTICALLY EXCITING LASER-ACTIVE CRYSTALS WITH POLARIZATION-DEPENDENT ABSORPTION
DISPOSITIF ET PROCEDE D'EXCITATION OPTIQUE DE CRISTAUX ACTIFS AU LASER AVEC ABSORPTION FONCTION DE LA POLARISATION

(30) Priorität: 16.01.2002 DE 10201383
(43) Veröffentlichungstag der Anmeldung: 13.10.2004
(73) Patentinhaber: Lumera Laser GmbH, 67661 Kaiserslautern (DE)
(72) Erfinder: KNAPPE, Ralf, 67611 Kaiserslautern (DE); NEBEL, Achim, 67705 Trippstadt (DE)
(74) Vertreter: Patentanwälte Lambsdorff & Lange
(86) Internationale Anmeldenummer: PCT/EP2002/014504
(87) Internationale Veröffentlichungsnummer: WO 2003/061085

(56) Entgegenhaltungen:
- US-A- 5 036 520
- US-A- 5 517 516
- US-A- 6 047 014
- PATENT ABSTRACTS OF JAPAN vol. 2000, no. 14, 5. März 2001 (2001-03-05) -& JP 2000 307179 A (FUJI PHOTO FILM CO LTD), 2. November 2000 (2000-11-02)
- PATENT ABSTRACTS OF JAPAN vol. 1998, no. 14, 31. Dezember 1998 (1998-12-31) -& JP 10 261825 A (NEC CORP), 29. September 1998 (1998-09-29)
- PATENT ABSTRACTS OF JAPAN vol. 016, no. 412 (E-1256), 31. August 1992 (1992-08-31) -& JP 04 137775 A (NEC CORP), 12. Mai 1992 (1992-05-12)

## Beschreibung

Die Erfindung betrifft eine Vorrichtung zur optischen Anregung von laseraktiven Kristallen mit polarisationsabhängiger Absorption, wobei die Vorrichtung einen Diodenlaser, der eine Pumpstrahlung erzeugt, einen laseraktiven Kristall, der in einem Festkörperlaser oder Festkörperlaserverstärker angeordnet ist aufweist, wobei der laseraktive Kristall eine Achse mit starker Absorption und eine Achse mit schwacher Absorption hat.

Ferner betrifft die Erfindung ein Verfahren zur optischen Anregung von laseraktiven Kristallen mit einem Diodenlaser, wobei der laseraktive Kristall in einem Festkörperlaser oder Festkörperlaserverstärker angeordnet ist.

Diodengepumpte Festkörperlaser, bei denen das Diodenlaserlicht als Pumpstrahlung von der Stirnfläche her in den laseraktiven Kristall eingestrahlt wird, besitzen einen hohen Wirkungsgrad für die Umwandlung der Leistung des Pumplichtes, das den laseraktiven Kristall anregt, in Leistung der erzeugten Laserstrahlung. Diese Laser werden bevorzugt für die Erzeugung von Laserlicht mit niedrigen und mittleren Leistungen (d.h. mit Ausgangsleistungen von ca. 1 bis 100 W) eingesetzt. Außerdem sind diese Laser dann besonders vorteilhaft, wenn die erzeugte Laserstrahlung eine gute Strahlqualität und eine hohe Brillanz, d.h. eine hohe räumliche Leistungsdichte besitzen soll. Aufgrund dieser Vorteile werden diese Art von Lasern in vielen Bereichen der Forschung und Technik mit Erfolg eingesetzt.

Die beschriebene Anregung des Laserkristalls mit Diodenfaserstrahlung, die als longitudinale Anregung oder Endpumpen bezeichnet wird, ermöglicht eine optimale Überlappung des Volumens, das im Kristall optisch angeregt wird, und dem Volumen der Moden des Laserresonators. Dadurch wird ein größtmöglicher Teil der im laseraktiven Kristall absorbierten Pumpstrahlung in Laserstrahlung umgewandelt.

Die Resonatormoden bestimmen die räumlichen Eigenschaften des erzeugten Laserstrahls. Dieser hat typischerweise einen kreisförmigen oder elliptischen Querschnitt. Bevorzugt wird der transversale Grundmode des Resonators mit einer gaußförmigen Intensitätsverteilung. Um einen hohen räumlichen Überlapp zwischen dem gepumpten Kristallvolumen und den Resonatormoden zu erzielen, muss die Verteilung der Diodenlaserstrahlung zunächst räumlich so geformt werden, dass die dadurch entstehende Intensitätsverteilung anschließend auf die räumliche Struktur der Moden des Laserresonators abgebildet werden kann.

Für die Anregung werden Hochleistungsdiodenlaser verwendet, die Pumpleistungen von typisch mehr als 4 Watt erzeugen. Sie bestehen nach dem heutigen Stand der Technik aus vielen Einzelemittern, die nebeneinander zu einem sogenannten "Barren"- oder "Array"- (engl. "diode laser bar") angeordnet sind. Die Abstrahlungsgeometrie einer solchen Pumplichtquelle aus einem Diodenlaser weicht stark von einer kreisförmigen Intensitätsverteilung ab. Die polarisierte Pumpstrahlung wird aus dem Diodenlaserbarren in einem linienförmigen Querschnitt mit einer Höhe von typisch 1 µm und einer Breite von typisch 10 mm emittiert. Die abgestrahlte Intensitätsverteilung ist nahezu gaußförmig, allerdings stark divergent in Richtung der Höhe der emittierenden Fläche ("fast-axis"), und stark strukturiert (Beugungsmaßzahl M² > 1000) entlang der Breite der emittierenden Fläche ("slow-axis"). Die emittierte Strahlung solcher Diodenlaser ist daher für die direkte longitudinale Anregung eines Festkörperlasers ungeeignet. Eine geeignete Strahlformung des von einem Laserbarren emittierten Pumplichtes ist daher unumgänglich.

Die Strahlformung der vom Diodenlaser ausgehenden Strahlung erfolgt bevorzugt durch Lichtleitfasern mit einem Durchmesser von 0,2 bis 1 mm. Mit diesen Lichtleitern wird die Pumpstrahlung vom Diodenlaser zum laseraktiven Kristall geführt. Für die Einkopplung der Diodenlaserstrahlung in die Lichtleitfasern gibt es mehrere Möglichkeiten. Die Druckschrift WO 98/35411 offenbart mindestens eine Laserdiode und einen Wellenleiter, der gegenüber der emittierenden Fläche der Laserdiode angeordnet ist. Mit einem geeigneten optischen Mittel wird die Strahlung in den Wellenleiter eingekoppelt und kann dann durch den Wellenleiter geformt der weiteren Verarbeitung zugeführt werden. Ebenso werden Wellenleiter in der Druckschrift WO 96/38749 beschrieben. Die Druckschrift DE 100 12 480 offenbart die Verwendung von Mikrooptiken zur Formung der von Diodenlasern ausgehenden Pumpstrahlung.

Die in den laseraktiven Kristall eingestrahlte Pumpstrahlung wird dort von den laseraktiven Ionen absorbiert. Die Intensität der eingestrahlten Pumpstrahlung nimmt nach Eintritt in den laseraktiven Kristall durch Absorption in Ausbreitungsrichtung exponentiell ab. Ein beträchtlicher Anteil (typ. 25 bis 50%) wird in Form von Wärme an den laseraktiven Kristall abgegeben. Diese Wärme bewirkt eine lokale Aufheizung des laseraktiven Kristalls. Die Vorteile von laseraktiven Kristallen mit niedriger Dotierung werden beispielsweise in der Druckschrift WO 00/31842 beschieben. Bei der Verwendung niedrig dotierter laseraktiver Kristalle wird die absorbierte Pumpstrahlung über ein größeres Volumen verteilt. Gemäß der in dieser Druckschrift offenbarten Lehre sollte beispielsweise in Nd:YVO₄ die Dotierung weniger als 0,5% betragen. Die Dotierungskonzentration von laseraktiven Kristallen unterliegt jedoch derzeit herstellungsbedingt Schwankungen von typisch 0,1%. Bei laseraktiven Kristallen mit einer Dotierung von beispielsweise 0,3% führen diese Schwankungen relativ zu erheblichen Abweichungen vom Sollwert der Dotierungskonzentration, die über 30% betragen können. Dadurch wird die zuverlässige Verwendbarkeit dieser laseraktiven Kristalle in einem erheblichen Maße eingeschränkt.

Eine andere Methode zur Verringerung der thermooptischen Störungen bei Festkörperlasern, die von Diodenlasern mit Lichtleitfasern angeregt werden, ist die Verwendung von Faserbündeln statt einer einzelnen Multimode-Uchtleitfaser. Auf diese Weise kann die Intensitätsverteilung des Pumplichtes geformt werden. Dies ist z.B. in der Druckschrift EP 0990283 und in der Druckschrift WO 96/34436 beschrieben. Die thermischen Gradienten durch die Änderung entlang der Absorptionsrichtung und die damit verbundenen thermisch induzierten mechanischen Spannungen bleiben jedoch bestehen.

Die Strahlformung durch Lichtleitfasern besitzt jedoch - neben den genannten Vorteilen - wesentliche Nachteile, aus denen in der Regel nachteilige Eigenschaften für die damit realisierten longitudinal angeregten Festkörperlaser resultieren:
a) Bei der Einkopplung in die Lichtleiter entstehen Einkopplungsverluste, die typischerweise zwischen 25 und 40% betragen. Daher können maximal 75% der Diodenlaserleistung als Pumpstrahlung zur Anregung des Festkörperlasers genutzt werden.
b) Die Konfektionierung der Diodenlaser mit Lichtleitfasern verursacht hohe Kosten.
c) Der Transport der Strahlung in der Lichtleitfaser ist nicht polarisationserhaltend, d.h. polarisierte Anteile der Pumpstrahlung des Diodenlasers werden durch den Transport in der Lichtleitfaser in andere Polarisationszustände überführt. Die Polarisationsrichtung des Lichtes am Ausgang der Lichtleitfaser ist in der Regel zeitlich nicht stabil. Die Polarisationsrichtung ändert sich, beispielsweise wenn die Faser mechanisch bewegt wird.

Die teilweise Depolarisation der Pumpstrahlung sowie die zeitliche Instabilität des Polarisationszustandes kann bei endgepumpten Festkörperlasern zu erheblichen Problemen führen. Dies ist vor allem der Fall, wenn die Absorptionskoeffizienten der verwendeten Laserkristalle von der Polarisationsrichtung des eingestrahlten Pumplichtes abhängen, oder wenn der Laser optische Elemente bzw. Oberflächen enthält, deren Transmissionseigenschaften vom Polarisationszustand des Pumplichtes und dessen Stabilität abhängig sind.

Die durch Anregung mit nicht polarisierter Pumpstrahlung verursachten Probleme lassen sich in zwei Kategorien einteilen.
1. Es gibt bekanntlich laseraktive Kristalle, deren Absorption von der Polarisation unabhängig ist (wie z.B. Neodym-Yttriumaluminiumgranat (Nd:YAG)), und solche, bei denen die Größe der Absorptionskoeffizienten für die Pumpstrahlung von der Orientierung der Polarisation des Pumplichtes zu den kristallinen Achsen abhängt. Diese laseraktiven Kristalle sind also bezüglich der Absorption optisch anisotrop. Zu den laseraktiven Kristallen, die polarisationsabhängig absorbieren, gehören bekanntermaßen Neodym-Yttriumvanadat (Nd:YVO₄) und Neodym-Gadoliniumvanadat (Nd:GdVO₄) sowie Neodym-Yttriumlithiumfluorid (Nd:YLF), Neodym-Lanthanscandium-borat (Nd:LSB) und Neodym-Yttriumaluminiumperovskit (Nd:YAlO₃). Diese Materialien besitzen hohe Absorptionskoeffizienten für die Pumpstrahlung, deren Größe sich entlang der Kristallachsen stark unterscheidet. In Nd:YVO₄ wird beispielsweise 809 nm-Pumpstrahlung mit einer Polarisation parallel zur c-Achse des Kristalls etwa 4 bis 6 mal stärker absorbiert, als Pumpstrahlung mit einer Polarisation parallel zur a-Achse. Wegen dieser Unterschiede in den Absorptionskoeffizienten kann keine optimale Dotierungskonzentration bzw. Kristalllänge mehr gefunden werden, so dass teilpolarisiertes Licht gleichmäßig im Kristall absorbiert wird. Durch die unterschiedliche Absorption der verschiedenen Polarisationsanteile entstehen zusätzliche mechanische Spannungsbelastungen im Laserkristall. Weiterhin bewirkt eine Änderung der Polarisation des Pumplichtes eine Änderung der absorbierten Leistung, sowie deren räumlicher Verteilung im laseraktiven Kristall. Auf diese Weise werden in der Regel Störungen des Laserbetriebs verursacht. Die Ursache für derartige Störungen sind beispielsweise zeitliche Schwankungen der Polarisationsrichtung, die z.B. durch mechanische Bewegungen der Faser oder der Pumplichtquelle verursacht werden.
2. Die Pumpstrahlung wird in den Festkörperlaser üblicherweise durch Resonatorspiegel und die Stirnflächen des laseraktiven Kristalls hindurch in den laseraktiven Kristall eingestrahlt. Diese Elemente sind mit dielektrischen Beschichtungen versehen, welche definierte Reflekäonseigenschaften haben. Sie funktionieren als hoch- oder teilreflektierende Spiegel oder als Antireflexbeschichtungen und haben häufig polarisationsabhängige Transmissions- oder Reflexionseigenschaften. Schwankungen der Pumplichtpolarisation können damit zu Schwankungen der transmittierten pumpleistung führen. Weiterhin werden häufig laseraktiven Kristalle verwendet, deren Endflächen im Brewster-Winkel orientiert sind und damit eine von der Polarisation abhängige Transmission besitzen. Solche Kristalloberflächen sind nur verlustarm transmittierend für eine bestimmte Polarisationsrichtung.

Um die genannten Nachteile zu vermeiden, wurden Verfahren entwickelt, die eine Störung des Laserbetriebs durch eine Änderung der Pumplichtpolarisation verringern oder vermeiden sollen. Die aus dem Stand der Technik bekannten Verfahren lösen die beschriebenen Probleme bei endgepumpten Festkörperlaser jedoch nur teilweise. So ist in dem U.S. Patent 6,137,820 ein Verfahren beschreiben, bei dem die Pumpstrahlung des Diodenlasers nach dem Transport durch eine Lichtleitfaser in zwei Teilstrahlen getrennt wird. Die Trennung erfolgt mit einem Polarisator, so dass jeder Teilstrahl vollständig linear polarisiert ist. Die polarisierten Teilstrahlen werden zur longitudinalen Anregung eines Festkörperlasers verwendet. Polarisationsänderungen in der Lichtleitfaser führen aber bei der Trennung der Polarisationsanteile am Polarisator dazu, dass sich die Leistungsanteile in den zwei Teilstrahlen ändern. Diese Leistungsschwankungen führen im Laserkristall weiterhin zu räumlichen Unterschieden in der Anregung und damit zu Änderungen in der Laserausgangsleistung und der Strahlqualität. Ebenfalls nachteilig ist die Verringerung (Halbierung) der Leistung der Pumpstrahlung durch die Strahlaufteilung.

In der U.S. Patentschrift US 5,999,544 ist eine Anordnung beschrieben, bei der die Pumpstrahlung für einen diodengepumpten Festkörperlaser, vor oder nach dessen Transport durch eine Lichtleitfaser gezielt depolarisiert wird. Auf diese Weise werden Schwankungen im Polarisationszustand der Pumpstrahlung vermieden und so deren Einfluss auf den Laserbetrieb minimiert. Für laseraktive Kristalle mit anisotroper Absorption wie z.B. Nd:YVO₄ wird die eine Hälfte der unpolarisierten Pumpstrahlung auf einer kurzen Länge absorbiert, die andere Hälfte auf einer vielfach längeren Strecke. Ein beträchtlicher Teil der Pumpleistung wird in unmittelbarer Nähe der Stirnfläche absorbiert und verursacht dort lokal eine starke Erwärmung des laseraktiven Kristalls. Da die Wärme nicht gleichmäßig im laseraktiven Kristall verteilt ist, entstehen erhebliche thermooptische Störungen. Ein weiterer Nachteil besteht darin, dass die depolarisierte Pumpstrahlung beim Durchgang durch Flächen mit polarisationsabhängiger Transmission (wie z.B. Kristalle mit Brewster-Endflächen) erhebliche Verluste erfährt.

Eine Aufgabe der Erfindung ist, eine Vorrichtung zur optischen Anregung von laseraktiven Kristallen mit polarisationsabhängiger Absorption zu schaffen, die eine zeitlich konstante Laserstrahlung liefert und dabei Pumpstrahlung effizient ausnutzt. Ferner soll eine Laserstrahlung mit hohem Wirkungsgrad und damit hoher Ausgangsleistung bei guter räumlicher Strahlqualität ermöglicht werden.

Die Aufgabe wird durch eine im Anspruch 1 definierte Vorrichtung gelöst, die dadurch gekennzeichnet ist, dass dem Diodenlaser ein optisches Element nachgeschaltet ist, um eine räumliche Formung, der Pumpstrahlung des Diodenlasers zu erzielen und dass die Pumpstrahlung (2) des Diodenlasers (1) weitestgehend in einer ausgezeichneten Polarisaüonsrichtung linear polarisiert ist, und dass die Polarisationsrichtung der Pumpstrahlung (2) bei der Einstrahlung in den laseraktiven Kristall (14) parallel zur Achse (A) des laseraktiven Kristalls (14) mit schwacher Absorption orientiert ist.

Eine weitere Aufgabe der Erfindung ist, ein Verfahren zur optischen Anregung von laseraktiven Kristallen mit polarisationsabhängiger Absorption zu schaffen, das eine zeitlich konstante Laserstrahlung liefert und dabei Pumpstrahlung effizient ausnutzt. Ferner soll eine Laserstrahlung mit hohem Wirkungsgrad und damit hoher Ausgangsleistung bei guter räumlicher Strahlqualität ermöglicht werden.

Die Aufgabe wird gelöst durch eine im Anspruch 15 definiertes Verfahren, das durch die folgenden Schritte gekennzeichnet ist:
- räumliches Formen einer von dem Diodenlaser erzeugten Pumpstrahlung, mit einem optischen Element wobei die geformte Pumpstrahlung eine Polarisationsrichtung aufweist, und
- Einstrahlen auf einen laseraktiven Kristall, der eine Achse mit starker Absorption und eine Achse mit schwacher Absorption aufweist, derart dass die Polarisationsrichtung der Pumpstrahlung parallel zur Achse des laseraktiven Kristalls mit schwacher Absorption orientiert ist.

Ein Vorteil der Erfindung ist, dass auf diese Weise die absorbierte Leistung über ein wesentlich größeres Volumen im laseraktiven Kristall verteilt ist. Thermisch induzierte Effekte im laseraktiven Kristalls werden dadurch wesentlich verringert. Die im laseraktiven Kristall absorbierte Leistung ist über ein wesentlich größeres Kristallvolumen verteilt, als wenn die Polarisation der Pumpstrahlung so orientiert wäre, dass der laseraktive Kristall stark absorbiert. Damit werden nachteilige Veränderungen von Lasereigenschaften, die durch lokale Erwärmungen des laseraktiven Kristalls verursacht werden, erheblich verringert.

Ein weiterer Vorteil ist, dass auf diese Weise Laserstrahlung mit hohem Wirkungsgrad und damit hoher Ausgangsleistung bei guter räumlicher Strahlqualität erzeugt werden kann. Die mit diesem Verfahren erzeugte Strahlung ist vorzugsweise beugungsbegrenzt und soll eine hohe Brillanz besitzen. Weiterhin ist die Leistung der Laserstrahlung zeitlich möglichst stabil und unempfindlich gegenüber äußeren Einflüssen. Mit der Erfindung wird die Pumpleistung von diodengepumpten Festkörperlasern im Vergleich zu bestehenden Systemen um ein mehrfaches erhöht, bevor thermisch induzierte Störungen im laseraktiven Kristall auftreten. Auf diese Weise kann entweder die Ausgangsleistung der Festköperlaser vervielfacht werden, oder, bei gleicher Ausgangsleistung, die Strahlqualität und Brillanz der Festkörperlaserstrahlung erheblich verbessert werden.

Weiterhin verschafft die Erfindung den Vorteil, dass in Festkörperlasern mit hoher Ausgangsleistung laseraktive Kristalle mit handelsüblichen Dotierungen verwendet werden können. Diese Kristalle, die beispielsweise mehr als 0,5% (at.) Neodym enthalten, bieten zum einen den Vorteil, dass die herstellungsbedingten Schwankungen der Dotierungskonzentration weniger schwerwiegend sind, als bei Kristallen mit niedrigerer Dotierung. Zum anderen kann in den Kristallen mit höherer Dotierung mehr Laserenergie pro Volumenelement gespeichert werden. Dieses ist z.B. besonders vorteilhaft für Laser, die Strahlung in Form von Lichtimpulsen emittieren. Die höhere gespeicherte Energie ermöglicht in der Regel die Erzeugung von energiereicheren Lichtimpulsen.

Zur Anregung von Festkörperlasern bieten Diodenlaser, die in Form von Diodenlaserbarren (linear oder als flächige Matrix) angeordnet sind, mit einer Strahlformung durch Lichtleitfasern den Vorteil, dass hohe Pumpleistungen (von bis zu 30 W) auf Flecke mit kleinem Durchmesser (von typ. 0,4 bis 1 mm) fokussiert werden können. Die fokussierte Pumpstrahlung hat einen kreisförmigen Querschnitt. Auf diese Weise ist ein guter Überlapp des gepumpten Volumens des laseraktiven Kristalls mit den Moden des Resonators des Festkörperlasers zu erreichen. Weiterhin können durch die Verwendung von Lichtleitfasern die Pumpquellen für Diodenlaser (incl. Stromversorgung und Kühlung) räumlich vom Laserresonator getrennt werden, wodurch kompaktere und stabilere Laseraufbauten realisierbar sind.

Die in den laseraktiven Kristall eingestrahlte Pumpstrahlung wird dort von den laseraktiven Ionen absorbiert. Die Intensität des eingestrahlten Pumpstrahlung nimmt nach Eintritt in den Laserkristall durch Absorption in Ausbreitungsrichtung exponentiell ab. Die Stärke dieser Abnahme, die durch den Absorptionskoeffizienten beschrieben wird, hängt von der räumlichen Dichte der laseraktiven Ionen (Dotierung) und von deren Absorptionswirkungsquerschitt ab. Üblicherweise wird für eine effiziente Anregung eine möglichst hohe Absorption genutzt. In den laseraktiven Ionen wird bei der Absorption Energie gespeichert, welche nur zum Teil in Laserlicht umgewandelt wird. Ein beträchtlicher Anteil (typ. 25 bis 50%) wird in Form von Wärme an den laseraktiven Kristall abgegeben. Diese Wärme bewirkt eine lokale Aufheizung des laseraktiven Kristalls. Da viele der verwendeten laseraktiven Kristalle eine vergleichsweise schlechte Wärmeleitfähigkeit besitzen, entstehen zwischen den unterschiedlich stark gepumpten Regionen im laseraktiven Kristall erhebliche Temperaturunterschiede. Die Temperaturunterschiede führen zu thermooptischen Effekten.

Beispielsweise wölben sich durch die Wärmeausdehnung des Kristallzentrums die Kristallendflächen. Die gewölbten Endflächen wirken wie eine dicke Linse. Die Wärmeausdehnung erzeugt außerdem mechanische Spannungen, die den Brechungsindex verändern. Aus dem Temperaturprofil, das sich im Inneren des Kristalls ausbildet, resultiert ein Brechungsindexprofil, das ebenfalls wie eine Linse wirkt. Die Summe dieser Effekte, die üblicherweise unter dem Begriff "thermisch induzierte Linse" zusammengefasst werden, bewirkt eine Verformung des emittierten Laserstrahls und üblicherweise eine Verschlechterung von dessen räumlicher Strahlqualität. Die thermisch induzierten mechanischen Spannungen können sogar zum Bruch der Kristalle führen. Die Erfindung hat den Vorteil, dass die vorstehend genannten Nachteile des Standes der Technik vermieden werden.

Während in der Vergangenheit die Ausgangsleistung der diodengepumpten Festkörperlaser durch die verfügbare Pumpleistung der Diodenlaser beschränkt wurde, sind Diodenlaser heute so leistungsstark, dass eine Beschränkung der Ausgangsleistung durch die thermische Belastungsgrenze der laseraktiven Kristalle erreicht wird. Mit der Erfindung wird diese Begrenzung erst bei wesentlich höheren Pumpleistungen eintreten, so dass leistungsstärkere Laser mit guter Strahlqualität realisierbar werden. Durch die Verwendung von polarisierter Pumpstrahlung besteht weiterhin erstmals die Möglichkeit, optische Komponenten und Resonatorkonfigurationen für den Festkörperlaser einzusetzen, die bisher mit teilweise oder unpolarisierter Pumpstrahlung von Diodenlasern nicht oder nur in wenig effizienter Weise anwendbar waren.

Als laseraktive Kristalle haben sich Kristalle hervorgetan, die aus Nd:YVO₄, Nd:GdVO₄, Nd:LSB, Nd:YAlO₃, Nd:YLF, oder Nd:BEL bestehen. Ebenso können andere Kristalle mit anisotroper Absorption verwendet werden.
Es gilt das Licht des Diodenlasers optimal in den laseraktiven Kristall abzubilden. Hierzu ist dem Diodenlaser ein optisches Element nachgeschaltet, das beispielsweise in der Form von Mikrooptiken ausgestaltet ist, um eine entsprechende räumliche Formung der Pumpstrahlung vom Diodenlaser zu erzielen. Besonders vorteilhaft ist, wenn das optische Element in Form eines Wellenleiters ausgebildet ist, um eine räumliche Formung der Pumpstrahlung vom Diodenlaser zu erzielen. Der polarisationserhaltende Wellenleiter kann z.B. aus einem Glasstab oder einer Lichtleitfaser bestehen.

Zur Erhöhung der Ausgangsleistung des Festkörperlasers, in dem sich der laseraktive Kristall befindet, können mehrere Diodenlaser vorgesehen sein, die das von ihnen ausgehende Licht der Pumpstrahlung auf den laseraktiven Kristall einstrahlen. Zur Einstrahlung der Pumpstrahlung auf den laseraktiven Kristall kann z.B. mindestens ein Resonatorspiegel vorgesehen sein. Ebenso ist es denkbar, dass die zur Einstrahlung geeignet geformte Pumpstrahlung direkt in den laseraktiven Kristall eingestrahlt wird.

Eine weitere vorteilhafte Ausführungsform der Erfindung ist, dass der zweiten Stirnfläche des laseraktiven Kristalls ein Reflektor zugeordnet ist, der die durch die erste Stirnfläche eingestrahlte und nicht absorbierte Pumpstrahlung reflektiert und als reflektierte Pumpstrahlung in die zweite Stirnfläche einstrahlt. Der hier verwendete laseraktive Kristall ist derart gewählt, dass er eine Dotierung und eine Länge aufweist, so dass etwa 50 bis 60% der Pumpstrahlung nach Eintritt durch die erste Stirnfläche im laseraktiven Kristall absorbierbar sind.

In einer anderen vorteilhaften Ausführungsform der Erfindung ist ein Laseroszillator vorgesehen, der einen Ausgangsstrahl erzeugt Zwischen einer abbildenden Optik für den Pumpstrahl und der ersten Stirnfläche des laseraktiven Kristalls ist ein Einkoppelspiegel für den Ausgangsstrahl vorgesehen. Der Ausgangsstrahl durchläuft den laseraktiven Kristall mindestens einmal und erzeugt dabei eine höhere Ausgangsleistung.

Weitere vorteilhafte Ausgestaltungen der Erfindung können den Unteransprüchen entnommen werden.

In der Zeichnung ist der Erfindungsgegenstand schematisch dargestellt und wird anhand der Figuren nachfolgend beschrieben. Dabei zeigen:
Fig. 1 eine schematische Darstellung des Prinzips der erfindungsgemäßen Anordnung;
Fig. 2 eine schematische Darstellung von einer Anordnung zur Formung der Pumpstrahlung eines Diodenlasers und dessen Einstrahlung auf einen laseraktiven Kristall;
Fig. 3 ein Diagramm, das die Intensität des Lichts der Pumpstrahlung in Abhängigkeit von der Position im laseraktiven Kristall zeigt;
Fig. 4a eine Darstellung der Temperaturverteilung im laseraktiven Kristall, wobei die Pumpstrahlung in c-Richtung des laseraktiven Kristalls polarisiert ist,
Fig. 4b eine Darstellung der Temperaturverteilung im laseraktiven Kristall, wobei die Pumpstrahlung in a-Richtung des laseraktiven Kristalls polarisiert ist,
Fig. 5 eine schematische Darstellung eines Lasers, der aus der Pumpstrahlung des Diodenlasers im laseraktiven Kristall die Laserstrahlung erzeugt,
Fig. 6 eine Ausführungsform der Erfindung, bei der die Pumpstrahlung von mehreren Diodenlasern in den laseraktiven Kristall eingestrahlt wird;
Fig. 7 eine schematische Darstellung einer Ausführungsform der Erfindung, bei der die Pumpstrahlung eines Diodenlasers direkt in eine mit dem laseraktiven Kristall versehenen Resonator eingekoppelt wird;
Fig. 8a ein Diagramm, das die Intensität der Pumpstrahlung im laseraktiven Kristall bei der Anregung durch die erste und die zweite Stirnfläche und einer Polarisierung in Richtung der a-Achse darstellt;
Fig. 8b ein Diagramm, das die Intensität der Pumpstrahlung im laseraktiven Kristall bei der Anregung durch die erste und die zweite Stirnfläche mit unpolarisierten Licht darstellt;
Fig. 9 eine schematische Darstellung einer Ausführungsform der Erfindung zur Verringerung der lokalen Temperaturunterschiede mit Pumplichtrückreflexion;
Fig.10 eine graphische Darstellung der Leistungsdichte der eingestrahlten Pumpstrahlung für den Fall der Pumplichtrückreflexion;
Fig. 11 eine Pumpanordnung für Festkörperlaserkristalle mit mehreren Stirnflächen die im Brewster-Winkel angeordnet sind; und
Fig. 12 eine schematische Darstellung eines Laserverstärkers mit den erfindungsgemäßen Merkmalen, der mit einem Diodenlaser gepumpt ist.

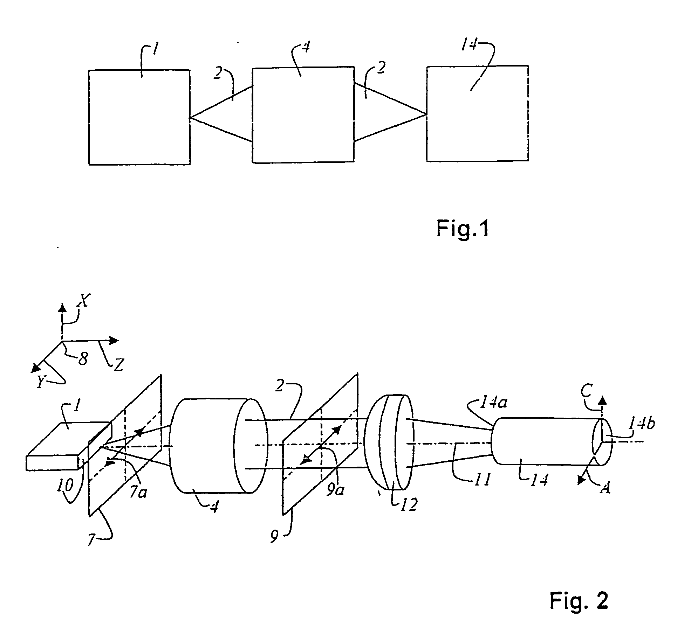

Das Prinzip der erfindungsgemäßen Anordnung ist in Fig. 1 dargestellt. Diese Anordnung enthält einen Diodenlaser 1 der linear polarisiertes Laserlicht emittiert. Das Laserlicht wird als Pumpstrahlung 2 bezeichnet. Die Pumpstrahlung 2 wird in seiner räumlichen Verteilung durch ein optisches Element 4 räumlich geformt und in einen laseraktiven Kristall 14 eingestrahlt, der eine polarisationsabhängige Absorption aufweist. Zu den grundlegenden Merkmalen der erfindungsgemäßen Anordnung gehört die Verwendung von linear polarisierter Pumpstrahlung 2, die von einen Diodenlaser 1 erzeugt ist. Die linear polarisierte Pumpstrahlung 2 wird zur Anregung (Pumpen) des laseraktiven Kristalls 14 verwendet. Der laseraktive Kristall 14 besitzt eine polarisationsabhängige Absorption, d.h. in einer bevorzugten Kristallrichtung wird die Pumpstrahlung 2 besonders gut absorbiert. Bei der Formung der räumlichen Verteilung der Pumpstrahlung 2 durch das optische Element 4 soll daher der lineare Polarisationszustand der Pumpstrahlung 2 weitestgehend erhalten bleiben. Die durch das optische Element 4 geformte räumliche Verteilung ist z.B. zur longitudinalen Anregung des Festkörperlaserkristalls geeignet Dieser laseraktive Kristall 6 ist bezüglich der Richtung der linear polarisierten Pumpstrahlung erfindungsgemäß so orientiert, dass die Polarisation parallel zur Richtung der schwächeren Absorption des laseraktiven Kristalls 14 ist.

Fig. 2 zeigt eine schematische Darstellung von einer Anordnung zur Formung der Pumpstrahlung 2 vom Diodenlaser 1. Ein bevorzugter Diodenlaser 1 besteht aus einer Vielzahl von Einzelemittern. Die Einzelemitter können in Form eines linearen Arrays angeordnet sein. Ebenso kann die Anordnung in Form eines 2-dimensionalen Arrays ausgestaltet sein. Der Darstellung in Fig. 1 ist ebenfalls ein Koordinatensystem 8, mit einer x-Richtung X, einer y-Richtung Y und einer z-Richtung Z, hinzugefügt, um die räumliche Lage der Anordnung und optischer Richtungen zu verdeutlichen. Der Diodenlaser 1 besitzt in dem hier dargestellten Ausführungsbeispiel eine Austrittsfacette 10, die parallel zur y-Richtung Y angeordnet ist. Der Diodenlaser 1 emittiert ausgehend von der Austrittsfacette 10 in z-Richtung Z die polarisierte Pumpstrahlung 2, die eine streifenförmige Abstrahlcharakteristik aufweist. Die Intensitätsverteilung dieser Pumpstrahlung 2 hat in einer ersten x-y-Schnittebene 7 unmittelbar hinter dem Diodenlaser 1 eine Abmessung von typischerweise 10 mm in y-Richtung Y und wenigen µm in x-Richtung X. Das Strahlprofil der Pumpstrahlung 2 ist gaußförmig und stark divergent in x-Richtung X ("fast-axis"), und stark strukturiert (Beugungsmaßzahl M² > 1000) in y-Richtung Y ("slow-axis"). Die Pumpstrahlting 2 ist mit einem Polarisationsverhältnis von ca. 100:1 typischerweise in y-Richtung Y polarisiert. Die Polarisationsrichtung der Pumpstrahlung 2 ist in der ersten x-y-Schnittebene 7 durch einen Doppelpfeil 7a gekennzeichnet. Die Strahlformung erfolgt derart, dass die polarisierte Pumpstrahlung 2 des Diodenlasers 1, mit mindestens einem optischen Element 4 unter Beibehaltung der Polarisationseigenschaften (linear polarisiert) in eine räumliche Intensitätsverteilung geformt wird, die longitudinal auf den transversalen Grundmode eines Festkörperlasers oder Laserverstärkers abgebildet werden kann. Die Pumpstrahlung 2 bzw. das Pumplicht hat in der einer zweiten x-y-Schnittebene 9 hinter dem optischen Element 4 eine annähernd kreisförmige, rechteckige oder elliptische Intensitätsverteilung. Die Pumpstrahlung 2 ist weiterhin linear polarisiert, beispielsweise in y-Richtung (wie mit dem Doppelpfeil 9a in der zweiten x-y-Schnittebene 9 gekennzeichnet), das Polarisationsverhältnis ist bevorzugt größer als 10:1. In dem in Fig. 2 dargestellten Ausführungsbeispiel sind die Polarisationsrichtungen in der ersten x-y-Schnittebene 7 und der zweiten x-y-Schnittebene 9 parallel dargestellt. Im allgemeinen Fall kann die Polarisationsrichtung in der zweiten x-y-Schnittebene 9 bezüglich der ersten x-y-Schnittebene 7 auch gedreht sein. Wichtig für die Erfindung ist, dass die Pumpstrahlung 2 linear polarisiert ist und beim Auftreffen auf den laseraktiven Kristall 14 parallel zur Achse A mit schwacher Absorption ist. Zur räumlichen Formung der Laserstrahlung kann das optische Element 4 auch in Form von polarisationserhaltenden Mikrooptiken, Wellenleitern, oder polarisationserhaltende Lichtleitfasern verwendet werden. Die räumlich geformte Pumpstrahlung 2 wird mit einer abbildenden Optik 12 auf einen laseraktiven Kristall 14 abgebildet. In Fig. 2 ist ein Fall dargestellt, dass die Polarisationsrichtung parallel zur Achse A mit schwacher Absorption ist. In Fällen, in denen das nicht der Fall ist, kann der laseraktive Kristall 14 in geeigneter Weise orientiert werden, damit die Parallelität der Achse A mit schwacher Absorption und der Polarisationsrichtung erfüllt ist. Ebenso könnte ein optisches Mittel (nicht dargestellt), wie z.B. eine Phasenplatte oder eine Zweifachreflexion vorgesehen sein, das die Polarisationsrichtung in geeigneter Weise dreht, damit die geforderte Parallelität erfüllt ist Der laseraktive Kristall 14 besitzt eine erste und eine zweite Stirnfläche 14a und 14b. Die Pumpstrahlung 2 wird in den laseraktiven Kristall 14 eingestrahlt von mindesten einer Stirnfläche 14a oder 14b eingestrahlt. Die abbildende Optik 12 kann eine Linse oder ein Linsensystem sein. Ebenso ist eine reflektierende Optik mit abbildenden Eigenschaften möglich, wie beispielsweise die Reflektion und Fokussierung der Pumpstrahlung 2 mit geeigneten Spiegeln. Die Absorption des laseraktiven Kristall 14 ist polarisationsabhängig. Die daraus resultierenden Merkmale sollen im Folgenden am Beispiel von Nd:YVO₄ veranschaulicht werden. Der Diodenlaser 1, das optische Element 4, die abbildende Optik 12 und der laseraktive Kristall 14 sind auf einer gemeinsamen Strahlachse 11 angeordnet, die in Fig. 2 gestrichelt - gepunktet dargestellt ist. In Fig. 2 ist der laseraktive Kristall 14 zylindrisch mit einem kreisförmigen Querschnitt dargestellt. Es sind jedoch auch andere Querschnitte, wie z.B. rechteckig, quadratisch oder polygonförmig, denkbar.

In einem Nd:YVO₄-Kristall, der in der dargestellten Ausführungsform verwendet ist, existiert eine optisch ausgezeichnete Richtung, die in der hier beschriebenen Orientierung, senkrecht zur Strahlachse 11 ist. Diese ausgezeichnete Richtung wird als eine kristalline c-Achse c bezeichnet. Die Richtungen senkrecht dazu werden beide als kristalline a-Achsen a bezeichnet. Für die Pumpstrahlung 2 mit einer Wellenlänge von 808,6 nm beträgt der maximale Absorptionskoeffizient für die Pumpstrahlung 2, die parallel zur kristallinien c-Achse c polarisiert ist α_{c} = 40,7 cm⁻¹. Er ist damit ca. viermal so groß, wie der Absorptionskoeffizient αₐ = 10,5 cm⁻¹ für Strahlung, die senkrecht dazu, also in Richtung der kristallinen a-Achse a polarisiert ist. In der Erfindung ist die Polarisationsrichtung der Pumpstrahlung 2 in Richtung der schwachen Absorption des laseraktiven Kristalls 14 orientiert. In dem in Fig. 2 gezeigten Beispiel ist die Orientierung in y-Richtung Y des Koordinatensystems und damit parallel zur kristallinen a-Achse a des laseraktiven Kristalls 14.

Die Verwendung eines Materials, wie Nd:YVO₄, als Material für den laseraktiven Kristall 14 ist besonders vorteilhaft, denn dieses Material ist in der Lage die Pumpstrahlung 2 mit einer definierten Polarisation in Richtung der kristallinen a-Achse a (Achse mit schwacher Absorption) mit einem vergleichsweise kleinen Absorptionskoeffizienten zu absorbieren und Laserstrahlung mit dazu senkrechter Polarisation, also parallel zur kristallinen c-Achse c (Achse mit starker Absorption) zu emittieren. Der besondere Vorteil der Emission mit einer Polarisation parallel zur kristallinen c-Achse c besteht darin, dass diese Strahlung einen hohen Wirkungsquerschnitt für die stimulierte Emission besitzt, also eine hohe Laser-Verstärkung erfährt.

Die Verringerung für die thermische Belastung des laseraktiven Kristalls 14, die aus der erfindungsgemäßen Anordnung resultiert, wird im Folgenden am Beispiel eines typischen Nd:YVO₄-Kristalls belegt. Der laseraktive Kristall 14 hat einen Durchmesser von 4 mm, eine Länge von 8 mm und eine Neodymdotierung von 1% (at.). Die Pumpstrahlung 2 hat eine Leistung von 10 Watt und wird durch eine kreisförmige Fläche mit einem Durchmesser von 0,8 mm von der erste Stirnfläche 14a her in den laseraktiven Kristall 14 eingestrahlt. Für die tatsächlich wirksame Absorption dieser Pumpstrahlung 2 müssen die Breiten der spektralen Verteilungen von Pumplicht und der Absorptionslinien berücksichtigt werden. Die sog. "effektiven" Absorptionskoeffizienten werden aus dem Faltungsintegral der beiden Verteilungen berechnet und betragen beispielsweise für einen typischen Diodenlaser 1 mit einer spektralen Breite von 3 nm und einer Zentralwellenlänge von 808,6 nm α_{c}(eff.) = 21,3 cm⁻¹ und αₐ(eff.) = 3,8 cm⁻¹. Die effektive Absorption ist also etwa sechsmal stärker für Pumpstrahlung 2, die in Richtung der kristallinen c-Achse c polarisiert ist, als für die Pumpstrahlung 2 mit einer Polarisation in Richtung der kristallinen a-Achse a.

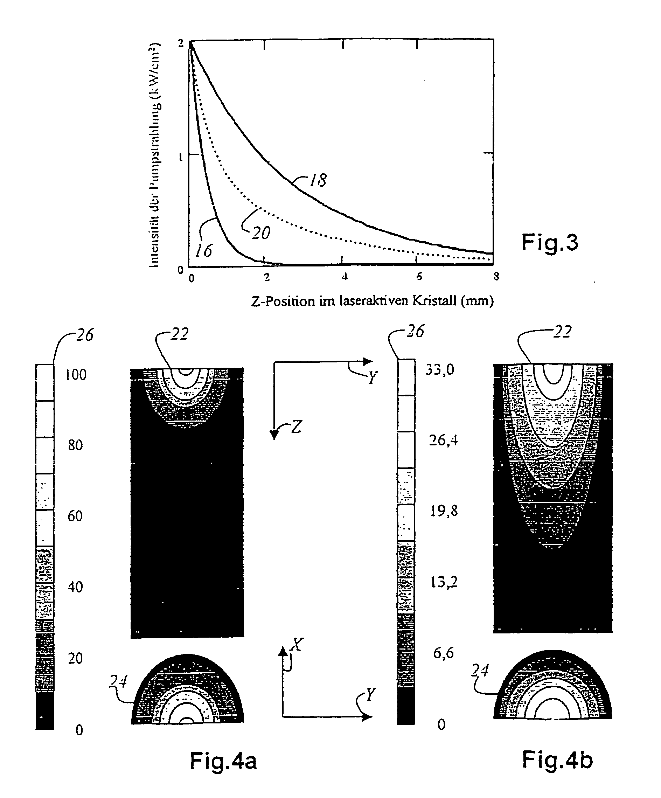

In Fig. 3 ist die örtliche Leistungsdichte (Intensität) der Pumpstrahlung 2 im laseraktiven Kristall 14 entlang der z-Richtung Z dargestellt. An der ersten Stirnfläche 14a des laseraktiven Kristalls 14 (z = 0) beträgt sie 2 kW/cm². Die Intensität der eingestrahlten Pumpstrahlung 2 nimmt nach Eintritt in den laseraktiven Kristall 14 infolge der Absorption exponentiell ab. Eine erste Kurve 16 zeigt die Absorption für die Pumpstrahlung 2, die parallel zur kristallinen c-Achse c polarisiert ist. Bereits nach nur 0,47 mm ist die Intensität auf 36% (1/e) abgefallen. Eine zweite Kurve 18 zeigt im Vergleich die Absorption für die Pumpstrahlung 2, die senkrecht zur kristallinen c-Achse c, d.h. in Richtung der Achse A mit schwacher bsorption polarisiert ist. Die Intensität ist erst nach 2,7 mm auf 36% (1/e) abgefallen, d.h. auf einer ca. sechsmal längeren Strecke. Für die Länge des laseraktiven Kristalls 14 von 8 mm werden 95% des Lichtes der Pumpstrahlung 2 absorbiert. Die Absorption für unpolarisierte Pumpsbahlung 2 ist durch die gestrichelte dritte Kurve 20 dargestellt. Deutlich ist der steile Abfall im Bereich der ersten Stirnfläche 14a des laseraktiven Kristalls 14 zu erkennen, der zeigt dass mehr als die Hälfte der Leistung auf einer Strecke von weniger als 1 mm absorbiert wird.

In Fig. 4a und Fig. 4b sind die Temperaturerhöhungen und -verteilungen im Nd:YVO₄ Kristall dargestellt, die durch die Absorption der Pumpstrahlung 2 verursacht werden. Die Temperaturverteilungen wurden mit einem geeigneten Simulationsmodell berechnet. Zur Veranschaulichung der Temperaturen im Inneren des laseraktiven Kristalls 14 wird in einem oberen Bildteil 22 ein Schnitt entlang einer x-z Ebene durch den zylinderförmigen laseraktiven Kristalls 14 dargestellt, in einem unteren Bildteil 24 ist die Temperaturverteilung auf der ersten Stirnfläche 14a des laseraktiven Kristalls 14 zu sehen. Eine Temperaturskala 26 ist jeweils neben dem oberen und unteren Bildteil 22 und 24 dargestellt. In Fig. 4a ist die Temperaturerhöhung durch die Absorption der Pumpstrahlung 2 mit einer Leistung von 10 W dargestellt, die in c-Richtung C polarisiert ist. Die maximale Temperaturerhöhung beträgt 99°C und ist direkt an der ersten Stirnfläche 14a des laseraktiven Kristalls 14 lokalisiert. Dadurch werden auf der Mantelfläche des laseraktiven Kristalls 14 Spannungen von etwa 40 MPa verursacht. Dieser Wert ist bereits in der Nähe der Bruchgrenze, die bei Nd:YVO₄ ca. 50 MPa beträgt. Die Ergebnisse der Berechnung sind in guter Übereinstimmung mit Experimenten, in denen ein Kristall mit den hier beschriebenen Parametern üblicherweise bei einer Pumpleistung von ca. 13 Watt zerbrach.
In Fig. 4b ist der gleiche Fall für die in der a-Achse A polarisierte Pumpstrahlung 2 aufgetragen. Die maximale Temperaturerhöhung beträgt nur 33°C und die Wärme ist über ein deutlich größeres Volumen verteilt. Die thermisch induzierten Spannungen betragen maximal 15 MPa. Für den in diesem Beispiel beschriebenen Laserkristall 6 kann also mit der Erfindung die Pumpleistung im Vergleich zu den bisher üblichen Systemen um das dreifache erhöht werden. Damit ist eine wesentlich höhere Ausgangsleistung des Festkörperlasers zu erreichen.

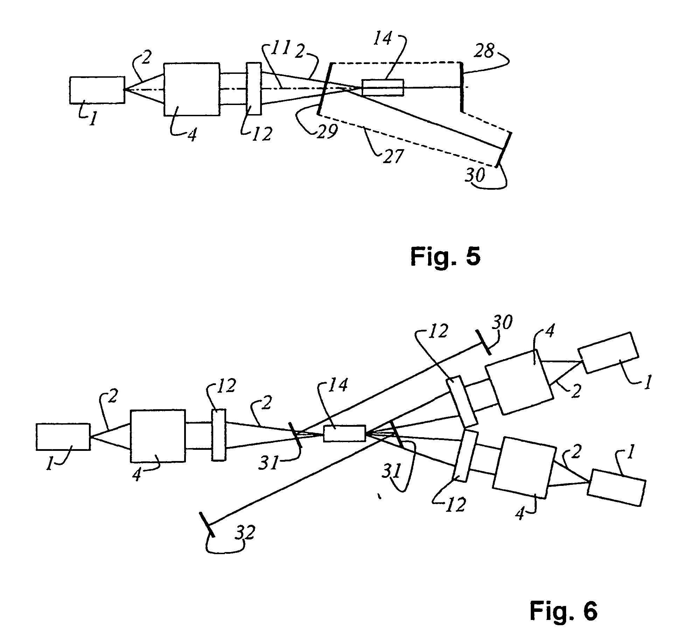

Zur Realisierung eines Lasers befindet sich der laseraktive Kristall 14, wie in Fig. 5 dargestellt, in einem Laserresonator 27, der typischerweise durch eine Vielzahl von Spiegeln 28, 29, 30 bzw. reflektierenden Flächen gebildet ist. In diesem Ausführungsbeispiel sind die Spiegel 28, 29, 30 ein Endspiegel 28, mögliche Faltungsspiegel 29 und ein Auskoppelspiegel 30. Eine oder mehrere dieser Spiegelbeschichtungen können sich auch direkt auf der Oberfläche des laseraktiven Kristalls 14 befinden. Die Moden des Laserresonators 27 bestimmen die räumlichen Eigenschaften des erzeugten Laserstrahls. Bevorzugt wird der transversale Grundmode des Laserresonators 27 mit einer gaußförmigen Intensitätsverteilung. Die Pumpstrahlung 2 wird vorzugsweise durch einen oder mehrere der Resonatorspiegel (28, 29, 30) in den laseraktiven Kristall 14 eingestrahlt. Die Einstrahlung erfolgt entlang der Strahlachse 11 (hier z-Richtung) oder in einem kleinen Winkel zu dieser.

Um höhere Ausgangsleistungen aus dem laseraktiven Kristall 14 zu erhalten, kann Pumpstrahlung 2 durch die erste und die zweite Stirnfläche 14a und 14b des laseraktiven Kristalls 14 gleichzeitig in diesen eingestrahlt werden (siehe Fig. 6). Mehrere Diodenlaser 1 sind vorgesehen, die das von ihnen ausgehende Licht der Pumpstrahlung 2 auf den laseraktiven Kristall 14 einstrahlen. Wie bereits in Fig. 2 beschrieben, ist jedem Diodenlaser 1, ein optisches Element 4 zur Formung der Pumpstrahlung 2 zugeordnet. Ebenso ist jedem optischen Element 4 eine abbildende Optik 12 zugeordnet, die die Pumpstrahlung 2 auf den laseraktiven Kristall 14 abbildet. Zur Einstrahlung der Pumpstrahlung 2 auf den laseraktiven Kristall 14 ist mindestens ein Resonatorspiegel 30, 31 und 32 vorgesehen. Weiterhin kann das Licht der Pumpstrahlung 2 von mehreren Diodenlasern 1 simultan von mindestens einer Seite des Kristalls eingestrahlt werden.

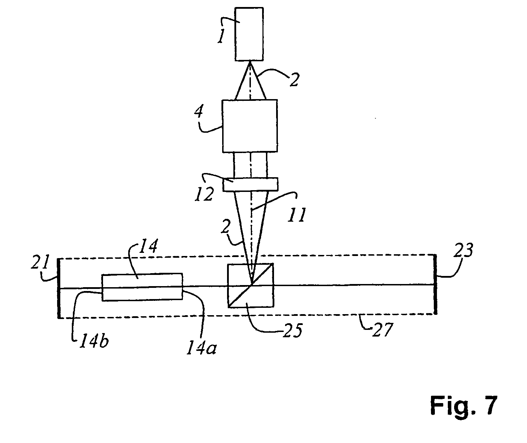

In Fig. 7 ist ein weiteres Ausführungsbeispiel der Erfindung offenbart. Zur Realisierung eines Lasers befindet sich der laseraktive Kristall 14 ebenfalls, wie in Fig. 5 dargestellt, in einem Laserresonator 27, der hier durch einen ersten und einen zweiten Resonatorspiegel 21 und 23 gebildet ist. Die Moden des Laserresonators 27 bestimmen die räumlichen Eigenschaften des erzeugten Laserstrahls. Bevorzugt wird der transversale Grundmode des Laserresonators 27 mit einer gaußförmigen Intensitätsverteilung. Die Pumpstrahlung 2 wird in diesem Ausführungsbeispiel direkt in den Laserresonator 27 eingekoppelt. Dazu ist ein entsprechendes Einkoppelmittel 25 vorgesehen, die die Pumpstrahlung auf die erste Stirnfläche 14a des laseraktiven Kristalls 14 eingestrahlt. Wie bereits in Fig. 2 beschrieben, ist jedem Diodenlaser 1, ein optische Element 4 zur Formung der Pumpstrahlung 2 zugeordnet. Ebenso ist jedem optischen Element 4 eine abbildende Optik 12 zugeordnet, die die Pumpstrahlung 2 auf das Einkoppelelement 25 abbildet. Das Einkoppelelement 25 ist z.B. in der Form eines Polarisationsstrahlteilers ausgebildet. Andere Formen des Einkoppelelements 25 sind dem Fachmann hinlänglich bekannt.

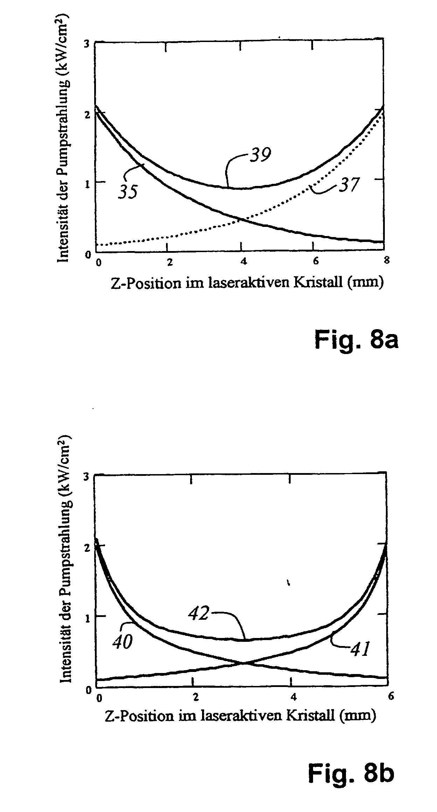

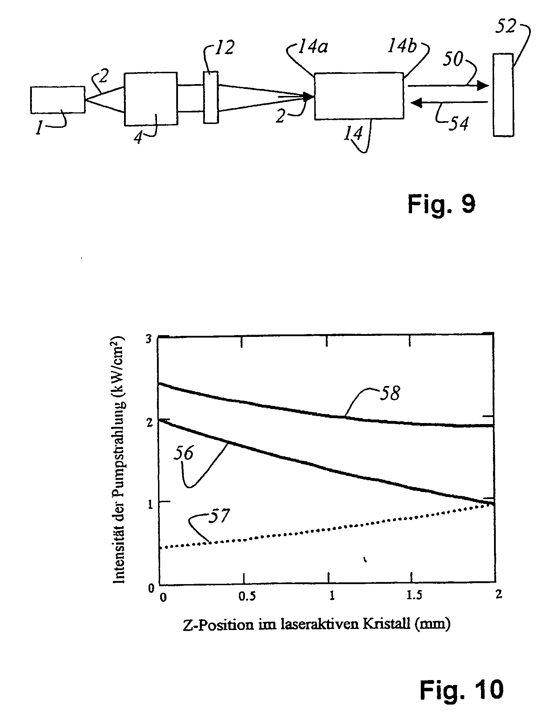

Die starke Abnahme der eingestrahlten Pumpstrahlung 2 und die damit verbundene ungleichmäßige Verteilung der Wärme lässt sich durch die Anregung durch beide Stirnflächen 14a oder 14b nur bedingt ausgleichen. In Fig. 8a und 8b ist in Analogie zu Fig. 3 die Intensität des eingestrahlten Pumplichtes im Laserkristall entlang der z-Richtung Z dargestellt, jedoch für die Anregung durch die erste und zweite Stirnfläche 14a und 14b. Eine erste Kurve 35 in Fig. 8a zeigt in Analogie zu Fig. 3 die Absorption für Pumpstrahlung 2, die in Richtung der Achse A mit schwacher Absorption polarisiert ist und durch die erste Stirnfläche 14a eingestrahlt wird. Eine zweite Kurve 37 stellt den entsprechenden Intensitätsverlauf für die Pumpstrahlung 2 dar, die durch die zweite Stirnfläche 14b eingestrahlt wird. Die Intensitäten addieren sich zu einer dritten Kurve 39, die die Gesamtintensität darstellt. Die Gesamtintensität weist in der Mitte des laseraktiven Kristalls 14 keinen Gradienten auf. Die Abnahme der Intensität im Bereich der ersten und zweiten Stirnfläche 14a und 14b des laseraktiven Kristalls 14 und die daraus resultierenden lokalen Temperaturunterschiede werden weniger verändert. Die erfindungsgemäße Anordnung führt auch in diesem Fall zu einer wesentlichen Verringerung der thermisch induzierten Effekte. Als Vergleich hierzu ist die Anregung mit Pumpstrahlung 2, die nicht polarisiert ist, in Fig. 8b dargestellt. In Fig. 8b zeigt eine erste Kurve 40 die Absorption der unpolarisierten Pumpstrahlung 2, die durch die erste Stirnfläche 14a eingestrahlt wird. In entsprechender Weise stellt eine zweite Kurve 41 den Intensitätsverlauf für die Pumpstrahlung 2 dar, die durch die zweite Stirnfläche 14b eingestrahlt wird. Die Intensitäten addieren sich zu einer dritten Kurve 42, die die Gesamtintensität darstellt. Besonders deutlich ist in Fig. 7b der steile Abfall der Gesamtintensität im Bereich der ersten und der zweiten Stirnfläche 14a und 14b. Durch den steilen Abfall werden, wie bereits in Fig. 3 erwähnt, im laseraktiven Kristall stark unterschiedliche Temperaturverteilungen erzeugt und somit bleiben die thermisch induzierten Probleme unverändert bestehen. Eine weitere Methode, mit der erfindungsgemäßen Anordnung die lokalen Temperaturunterschiede in einem laseraktiven Kristall 14 mit polarisationsabhängiger Absorption zu verringern, ist die Verwendung der nichtabsorbierten Pumpstrahlung, die in Fig. 9 dargestellt ist. Bei diesem Verfahren der Pumplichtrückreflexion wird die polarisierte Pumpstrahlung 2 aus dem Diodenlaser 1 wie beschrieben in dem optischen Element 4 und der abbildende Optik 12 geformt und in den laseraktiven Kristall 14 eingestrahlt. Die Dotierung und die Länge des laseraktiven Kristalls 14 werden so gewählt, dass nur ein Teil der Pumpstrahlung 2, typischerweise etwa 40 bis 60%, im laseraktiven Kristall 14 absorbiert werden. Eine nicht absorbierte Pumpstrahlung 50 wird mit einem Reflektor 52 wieder in den laseraktiven Kristall 14 zurückgeworfen. Durch den Reflektor 52 wird eine reflektierte Pumpstrahlung 54 erzeugt, die eine zur Anregung des Lasers geeignete Divergenz hat. Dieser Reflektor 52 kann auch abbildende optische Elemente enthalten und er kann auch direkt auf die zweite Stirnfläche 14b des laseraktiven Kristalls 14 aufgebracht werden. Die reflektierte Pumpstrahlung 54 durchläuft den laseraktiven Kristall 14 nun in der entgegengesetzten Richtung wie die durch die erste Stirnfläche 14a eingestrahlte Pumpstrahlung 2 und wird dabei weiter absorbiert. Auf diese Weise wird eine gleichmäßigere Verteilung der Intensität der Pumpstrahlung 2 im laseraktiven Kristall 14 erreicht. Weiterhin können kürzere Laserkristalle verwendet werden, was für die Erzeugung ultrakurzer Laserimpulse vorteilhaft ist.

In Fig. 10 ist die Leistungsdichte der eingestrahlten Pumpstrahlung 2 im laseraktiven Kristall 14 für den Fall der in Fig. 9 beschriebenen Pumplichtrückreflexion dargestellt. Der laseraktive Nd:YVO₄-Kristall hat in diesem Beispiel eine Länge von 2 mm. An der ersten Stirnfläche 14a des laseraktiven Kristalls 14 (z = 0) beträgt die Pumpleistungsdichte 2 kW/cm². Die Intensität des eingestrahlten Pumplichts nimmt beim Durchgang durch den Laserkristall infolge der Absorption auf etwa 1 kW/cm² ab, wie in einer ersten Kurve 56 gezeigt. Die nicht absorbierte Pumpstrahlung 50 wird zurückreflektiert und auf dem Rückweg durch den laseraktiven Kristall 14 weiter absorbiert, wie in einer zweiten Kurve 57 dargestellt ist. Die Gesamtintensität, ist in einer dritten Kurve 58 dargestellt und zeigt eine sehr geringe Abnahme der Intensität entlang der Einstrahlungsrichtung. Auf diese Weise werden die oben beschriebenen thermisch induzierten Probleme im laseraktiven Kristall 14 weiter verringert oder weitgehend vermieden.

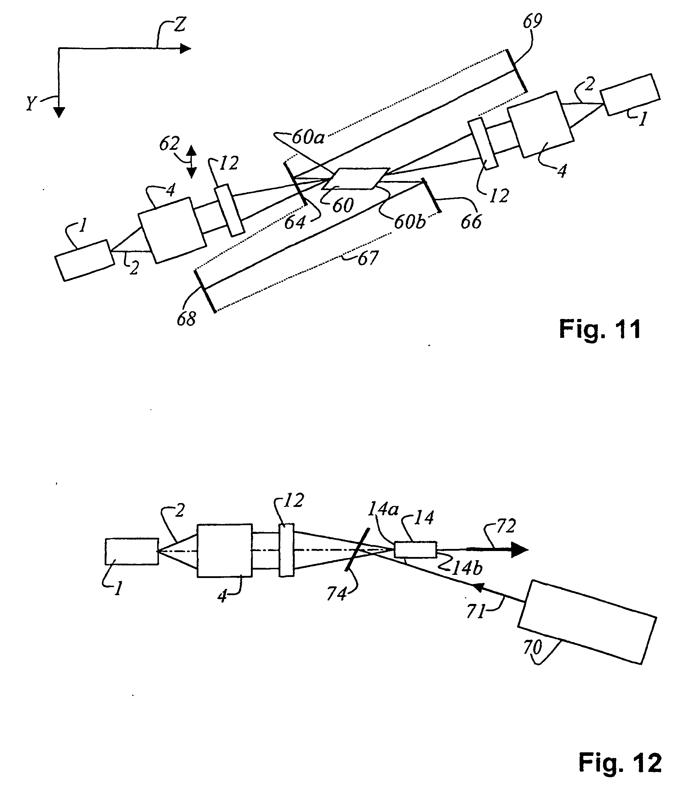

Fig. 11 zeigt die Pumpanordnung für Festkörperlaserkristalle 60 mit einer oder mehreren Stirnflächen 60a, 60b, die im Brewster-Winkel angeordnet sind. In diesem Fall liegt die Polarisationsrichtung (hier y-Richtung Y) der Pumpstrahlung 2, d.h. die Richtung des E-Feld-Vektors 62, dargestellt durch den Doppelpfeil, in der Ebene des Brewster-Schnittes. Die Pumpstrahlung 2 wird von mindestens einem Diodenlaser 1 erzeugt. Dem Diodenlaser 1 ist, wie in Fig. 5, Fig. 6 oder Fig. 9 dargestellt, das optische Element 4 und die abbildende Optik 12 nachgeschaltet. Die Pumpstrahlung 2 wird durch einen ersten Faltungsspiegel 64 oder an einem zweiten Faltungsspiegel 66 vorbei eingestrahlt. Für den Fall, dass die Polarisation von Pumpstrahlung 2 und Laserlicht senkrecht zueinander orientiert sind, kann die Pumpstrahlung 2 auch über ein resonatorinternes optisches Element mit polarisationsabhängiger Reflektion und Transmission (z.B. einen Polarisator) in den Festkörperlaserkristall 60 eingestrahlt werden. Der Festkörperlaserkristall 60 befindet sich ebenfalls in einem Resonator 67, der durch einen ersten und einen zweiten Resonatorspiegel 68 und 69 begrenzt ist. Eine solche Anordnung kann erhebliche Vorteile bieten. So werden zum einen geometrische Resonatorkonfigurationen realisierbar, bei denen der Festkörperlaserkristall 60 nicht in der Nähe eines Resonatorspiegels 68 oder 69 platziert sein muss. Zum anderen können Lasersysteme realisiert werden, bei denen die Einstrahlung der Pumpstrahlung 2 durch die Faltungsspiegel 64 oder 66 hindurch schwierig oder nachteilig wäre. Dies ist zum Beispiel der Fall bei Anregung mit UV-Licht, für das die Spiegel eine niedrige Zerstörschwelle besitzen oder für den Fall, dass die Pumpstrahlung 2 und das Laserlicht eine ähnliche Wellenlänge besitzen.

Fig. 12 zeigt die Anordnung mit den erfindungsgemäßen Merkmalen für einen Laserverstärker, der aus einem Diodenlaser 1 als Pumplichtquelle, aus einem optischen Element 4, einer abbildenden Optik 12 und einem laseraktiven Kristall 14 besteht. Die im laseraktiven Kristall 14 absorbierte Pumpstrahlung 2 bewirkt dort eine Energiespeicherung. Ein Laseroszillator 70 erzeugt einen Ausgangsstrahl 71, dessen Strahlprofil vorzugsweise dem transversalen Grundmode entspricht. Die Leistung des Laseroszillators 70 kann kontinuierlich oder gepulst abgegeben werden. Ein Einkoppelspiegel 74 ist vorgesehen, um den Ausgangsstrahl 71 des Laseroszillators 70 in den laseraktiven Kristall 14 einzukoppeln. Der Ausgangsstrahl 71 des Laseroszillators 70 durchläuft den laseraktiven Kristall 14 einmal oder mehrere Male. Die im laseraktiven Kristall 14 gespeicherte Energie verstärkt den Ausgangsstrahl 71 zu einem Strahl mit höherer Ausgangsleistung 72. Zu beachten ist, dass die räumliche Form der Pumpstrahlung an das Profil des Ausgangsstrahls 71 des Laseroszillators 70 angepasst ist. Durch die erfindungsgemäße Orientierung der linear polarisierten Pumpstrahlung 2 des Diodenlasers-1 parallel zur Richtung der schwächeren Absorption (a-Achse A) des laseraktiven Kristalls 14 wird eine Verteilung der im laseraktiven Kristall 14 absorbierten Leistung über ein wesentlich größeres Kristallvolumen erreicht. Damit werden, wie anhand der Fig. 1 beschrieben, geringeren thermisch induzierten Störungen im Laserkristall verursacht. Auf diese Weise wird das Strahlprofil des verstärkten Strahls weitestgehend nicht verändert und eine hohe räumliche Qualität des Strahls des Laseroszillators 70 bleibt auch während der Verstärkung erhalten.

In dem vorliegenden Ausführungsbeispiel kann der Einkoppelspiegel 74 auch weggelassen werden. Der Ausgangsstrahl 71 des Laseroszillators 70 wird dann direkt über die erste oder die zweite Stirnfläche 14a oder 14b in den laseraktiven Kristall 14 eingekoppelt.

Die Erfindung wurde in bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Diodenlaser
- 2: Pumpstrahlung
- 4: optisches Element
- 7: erste x-y-Schnittebene
- 7a: Doppelpfeil
- 8: Koordinatensystem
- 9: zweite x-y-Schnittebene
- 9a: Doppelpfeil
- 10: Austrittsfacette
- 11: Strahlachse
- 12: abbildende Optik
- 14: laseraktiver Kristall
- 14a: erste Stirnfläche
- 14b: zweite Stirnfläche
- 16: erste Kurve
- 18: zweite Kurve
- 20: dritte Kurve
- 21: erster Resonatorspiegel
- 22: oberer Bildteil
- 23: zweiter Resonatorspiegel
- 24: unterer Bildteil
- 25: Einkoppelmittel
- 26: Temperaturskala
- 27: Laserresonator
- 28: Endspiegel
- 29: Faltungsspiegel
- 30: Auskoppelspiegel
- 31: Resonatorspiegel
- 32: Resonatorspiegel
- 33: Resonatorspiegel
- 35: erste Kurve
- 37: zweite Kurve
- 39: dritte Kurve
- 40: erste Kurve
- 41: zweite Kurve
- 42: dritte Kurve
- 50: nicht absorbierte Pumpstrahlung
- 52: Reflektor
- 54: reflektierte Pumpstrahlung
- 56: erste Kurve
- 57: zweite Kurve
- 58: dritte Kurve
- 60: Festkörperlaserkristall
- 60a: Stirnfläche
- 60b: Stirnfläche
- 62: E-Feld-Vektor
- 64: erster Faltungsspiegel
- 66: zweiter Faltungsspiegel
- 67: Resonator
- 68: erster Resonatorspiegel
- 69: zweiter Resonatorspiegel
- 70: Laseroszillators
- 71: Ausgangsstrahl
- 72: verstärkter Ausgangsstrahl
- 74: Einkoppelspiegel
- A: Achse mit schwacher Absorption
- C: Achse mit starker Absorption
- a: kristalline a-Achse
- c: kristalline c-Achse
- X: x-Richtung
- Y: y-Richtung
- Z: z-Richtung

## Patentansprüche

1. Vorrichtung zur optischen Anregung von laseraktiven Kristallen mit einem Diodenlaser (1), der eine Pumpstrahlung (2) erzeugt, wobei der laseraktive Kristall in einem Festkörperlaser oder Festkörperlaserverstärker angeordnet ist und wobei der laseraktive Kristall eine Achse C mit starker Absorption und eine Achse A mit schwacher Absorption aufweist, **dadurch gekennzeichnet, dass** dem Diodenlaser (1) ein optisches Element (4) nachgeschaltet ist, um eine räumliche Formung der Pumpstrahlung des Diodenlasers (1) zu erzielen und dass die Pumpstrahlung (2) des Diodenlasers weitestgehend in einer ausgezeichneten Polarisationsrichtung linear polarisiert ist, und dass die Polarisationsrichtung der Pumpstrahlung (2) bei der Einstrahlung in den laseraktiven Kristall (14) parallel zur Achse A des laseraktiven Kristalls (14) mit schwacher Absorption orientiert ist.

2. Vorrichtung nach Anspruch 1, **dadurch gekennzeichnet, dass** der laseraktive Kristall (14) mindestens eine erste und eine zweite Stirnfläche aufweist (14a, 14b), die eine polarisationsabhängige Transmission besitzt, und dass die Polarisationsrichtung der Pumpstrahlung (2) derart orientiert ist, dass die Reflektionsverluste an der ersten oder zweiten Stirnfläche (14a, 14b) minimal und die Lichtleistung, die in den laseraktiven Kristall (14) eintritt, maximal ist.

3. Vorrichtung nach Anspruch 1, **dadurch gekennzeichnet, dass** der Festkörperlaser oder Festkörperlaserverstärker einen Laserresonator (27) mit einer Vielzahl von Spiegeln (28, 29, 30) umfasst, deren Oberflächen mit polarisationsabhängiger Transmission versehen sind und dass die Polarisationsrichtung der Pumpstrahlung (2) derart orientiert ist, dass die Reflektionsverluste an diesen Oberflächen minimal und die Lichtleistung, die in den laseraktiven Kristall (14) eintritt, maximal ist.

4. Vorrichtung nach Anspruch 1, **dadurch gekennzeichnet, dass** der laseraktive Kristall (14) aus Nd:YVO₄, Nd:GdVO₄, Nd:LSB, Nd:YAlO₃, Nd:YLF, oder Nd:BEL besteht.

5. Vorrichtung nach einem der Ansprüche 1 bis 4, **dadurch gekennzeichnet, dass** der laseraktive Kristall (14) aus Nd:YVO₄ mit einer Neodymdotierung von mehr als 0,5% (at.) besteht.

6. Vorrichtung nach Anspruch 1, **dadurch gekennzeichnet, dass** das optische Element (4) in der Form von Mikrooptiken ausgestaltet ist.

7. Vorrichtung nach Anspruch 1, **dadurch gekennzeichnet, dass** das optische Element (4) in der Form eines polarisationserhaltenden Wellenleiters ausgebildet ist, um eine räumliche Formung der Pumpstrahlung (2) vom Diodenlaser (1) zu erzielen und wobei der polarisationserhaltende Wellenleiter z.B. aus einem Glasstab oder einer Lichtleitfaser besteht.

8. Vorrichtung nach Anspruch 1, **dadurch gekennzeichnet, dass** ein Einkoppelmittel (25) im Laserresonator (27) angeordnet ist, das die Pumpstrahlung (2) des Diodenlaser (1) mit polarisationsabhängiger Reflektion und Transmission in den laseraktiven Kristall (14) einstrahlt.

9. Vorrichtung nach einem der Ansprüche 1 bis 8, **dadurch gekennzeichnet, dass** mehrere Diodenlaser (1) vorgesehen sind, die das von ihnen ausgehende Licht der Pumpstrahlung (2) auf den laseraktiven Kristall (14) einstrahlen, und dass zur Einstrahlung der Pumpstrahlung (2) auf den laseraktiven Kristall (14) mindestens ein Resonatorspiegel (30, 31 oder 32) vorgesehen ist.

10. Vorrichtung nach einem der Ansprüche 1 bis 8, **dadurch gekennzeichnet, dass** der zweiten Stirnfläche (14b) des laseraktiven Kristalls (14) ein Reflektor (52) zugeordnet ist, der die durch die erste Stirnfläche (14a) eingestrahlte und nicht absorbierte Pumpstrahlung (50) reflektiert und als reflektierte Pumpstrahlung (54) in die zweite Stirnfläche (14b) einstrahlt.

11. Vorrichtung nach Anspruch 10, **dadurch gekennzeichnet, dass** der laseraktive Kristall (14) eine Dotierung und eine Länge aufweist, die derart gewählt sind, dass weniger als 70% der Pumpstrahlung (2) nach Eintritt durch die erste Stirnfläche (14a) im laseraktiven Kristall (14) absorbierbar sind.

12. Vorrichtung nach Anspruch 11, **dadurch gekennzeichnet, dass** etwa 50 bis 60% der Pumpstrahlung (2) nach Eintritt durch die erste Stirnfläche (14a) im laseraktiven Kristall (14) absorbierbar sind.

13. Vorrichtung nach einem der Ansprüche 1 bis 8, **dadurch gekennzeichnet, dass** ein Laseroszillator (70) vorgesehen ist, der einen Ausgangsstrahl (71) erzeugt und dass der Ausgangsstrahl (71) in den laseraktiven Kristall (14) mindestens über die erste oder zweite Stirnfläche (14a oder 14b) einkoppelbar ist, den laseraktiven Kristall (14) durchläuft und einen Strahl mit höherer Ausgangsleistung (72) erzeugt.

14. Vorrichtung nach Anspruch 13, **dadurch gekennzeichnet, dass** zwischen einer abbildenden Optik (12) für den Pumpstrahl (2) und der ersten Stirnfläche (14a) ein Einkoppelspiegel (74) für den Ausgangsstrahl (71) vorgesehen ist, der den Ausgangsstrahl (71) in den laseraktiven Kristall (14) einkoppelt.

15. Verfahren zur optischen Anregung von laseraktiven Kristallen (14) mit einem Diodenlaser (1) wobei der laseraktive Kristall (14) in einem Festkörperlaser oder Festkörperlaserverstärker angeordnet ist, **gekennzeichnet durch** die folgenden Schritte:
- räumliches Formen einer von dem Diodenlaser (1) erzeugten Pumpstrahlung (2) mit einem optischen Element (4), wobei die geformte Pumpstrahlung (2) eine Polarisationsrichtung aufweist, und
- Einstrahlen auf einen laseraktiven Kristall (14), der eine Achse C mit starker Absorption und eine Achse A mit schwacher Absorption aufweist derart, dass die Polarisationsrichtung der Pumpstrahlung (2) parallel zur Achse A des laseraktiven Kristalls (14) mit schwacher Absorption orientiert ist.

16. Verfahren nach Anspruch 15, **dadurch gekennzeichnet, dass** der laseraktive Kristall (14) und die Polarisationsrichtung der Pumpstrahlung (2) relativ zueinander ausgerichtet werden, damit die Achse A des laseraktiven Kristalls (14) mit schwacher Absorption parallel zur Polarisationsrichtung ist.

17. Verfahren nach Anspruch 15, **dadurch gekennzeichnet, dass** der laseraktive Kristall (14) mindestens eine erste und eine zweite Stirnfläche aufweist (14a, 14b), die eine polarisationsabhängige Transmission besitzt, und dass die Polarisationsrichtung der Pumpstrahlung (2) derart orientiert ist, dass die Reflektionsverluste an der ersten oder zweiten Stirnfläche (14a, 14b) minimal und die Lichtleistung, die in den laseraktiven Kristall (14) eintritt, maximal ist.

18. Verfahren nach Anspruch 15, **dadurch gekennzeichnet, dass** der Festkörperlaser oder Festkörperlaserverstärker einen Laserresonator (27) umfasst, der mit einer Vielzahl von Spiegeln (28, 29, 30), deren Oberflächen eine polarisationsabhängige Transmission aufweisen, versehen ist und dass die Polarisationsrichtung der Pumpstrahlung (2) derart orientiert ist, dass die Reflektionsverluste an diesen Oberflächen minimal und die Lichtleistung, die in den laseraktiven Kristall (14) eintritt, maximal ist.

19. Verfahren nach Anspruch 15, **dadurch gekennzeichnet, dass** der laseraktive Kristall (14) aus Nd:YVO₄, Nd:GdVO₄, Nd:LSB, Nd:YAlO₃, Nd:YLF, oder Nd:BEL besteht.

20. Verfahren nach einem der Ansprüche 15 bis 19, **dadurch gekennzeichnet, dass** der laseraktive Kristall (14) aus Nd:YVO₄ mit einer Neodymdotierung von mehr als 0,5% (at.) besteht.

21. Verfahren nach einem der Ansprüche 15 bis 20, **dadurch gekennzeichnet, dass** das Licht der Pumpstrahlung (2) von mehreren Diodenlasern (1) auf den laseraktiven Kristall (14) eingestrahlt wird, und dass zur Einstrahlung der Pumpstrahlung (2) auf den laseraktiven Kristall (14) mindestens ein Resonatorspiegel (31, 32 oder 33) vorgesehen ist.

22. Verfahren nach einem der Ansprüche 15 bis 20, **dadurch gekennzeichnet, dass** die aus der zweiten Stirnfläche (14b) des laseraktiven Kristalls (14) austretende Pumpstrahlung (52) von einem Reflektor (52) reflektiert wird und als reflektierte Pumpstrahlung (54) durch die zweite Stirnfläche (14b) abermals in den laseraktiven Kristall (14) eintritt.

23. Verfahren nach Anspruch 22, **dadurch gekennzeichnet, dass** der laseraktive Kristall (14) eine Dotierung und eine Länge aufweist, die derart gewählt sind, dass weniger als 70% der Pumpstrahlung (2) nach Eintritt durch die erste Stirnfläche (14a) im laseraktiven Kristall (14) absorbiert werden.

24. Verfahren nach Anspruch 23, **dadurch gekennzeichnet, dass** etwa 50 bis 60% der Pumpstrahlung (2) nach Eintritt durch die erste Stirnfläche (14a) im laseraktiven Kristall (14) absorbiert werden.

25. Verfahren nach einem der Ansprüche 15 bis 20, **dadurch gekennzeichnet, dass** durch einen Laseroszillator (70) ein Ausgangsstrahl (71) erzeugt wird, und dass der Ausgangsstrahl (71) mindestens über die erste oder zweite Stirnfläche (14a oder 14b) in den laseraktiven Kristall (14) eingestrahlt wird und diesen mindestens einmal durchläuft und dabei einen Strahl mit höherer Ausgangsleistung (72) erzeugt.

26. Verfahren nach Anspruch 25, **dadurch gekennzeichnet, dass** zwischen einer abbildenden Optik (12) für den Pumpstrahl (2) und der ersten Stirnfläche (14a) ein Einkoppelspiegel (74) für den Ausgangsstrahl (71) vorgesehen ist, der den Ausgangsstrahl (71) in den laseraktiven Kristall (14) einkoppelt.

## Claims

1. A device for the optical excitation of laser-active crystals, with a diode laser (1) which generates pump radiation (2), the laser-active crystal being arranged in a solid-state laser or solid-state laser amplifier and the laser-active crystal having an axis C with strong absorption and an axis A with weak absorption, **characterized in that** an optical element (4) is arranged downstream of said diode laser (1) in order to achieve spatial shaping of said pump radiation from said diode laser (1) and **in that** said pump radiation (2) from said diode laser (1) is substantially polarized linearly in a privileged polarization direction, and **in that** said polarization direction of said pump radiation (2) is oriented parallel to said weak-absorption axis A of said laser-active crystal (14) when it is incident in said laser-active crystal (14).

2. The device as set forth in claim 1, **characterized in that** said laser-active crystal (14) has at least a first and a second end face (14a, 14b) which have a polarization-dependent transmission, and **in that** the polarization direction of said pump radiation (2) is oriented so that the reflection losses at said first or second end faces (14a, 14b) are minimal and the optical power which enters said laser-active crystal (14) is maximal.

3. The device as set forth in claim 1, **characterized in that** said solid-state laser or solid-state laser amplifier comprises a laser resonator (27) with a multiplicity of mirrors (28, 29, 30), the surfaces of which are provided with polarization-dependent transmission, and **in that** the polarization direction of said pump radiation (2) is oriented so that the reflection losses at these surfaces are minimal and the optical power which enters said laser-active crystal (14) is maximal.

4. The device as set forth in claim 1, **characterized in that** said laser-active crystal (14) consists of Nd:YV0₄, Nd:GdVO₄, Nd:LSB, Nd:YA10₃, Nd:YLF or Nd:BEL.

5. The device as set forth in any of the claims 1 to 4, **characterized in that** said laser-active crystal (14) consists of Nd:YVO₄ with neodymium doping in excess of 0.5% (at.).

6. The device as set forth in claim 1, **characterized in that** said optical element (4) is configured in the form of micro-optics.

7. The device as set forth in claim 1, **characterized in that** said optical element (4) is designed in the form of a polarization-maintaining waveguide, in order to achieve spatial shaping of said pump radiation (2) from said diode laser (1), said polarization-maintaining waveguide consisting, for example, of a glass rod or an optical fiber.

8. The device as set forth in claim 1, **characterized in that** arranged in said laser resonator (27) is an input means (25) which injects said pump radiation (2) from said diode laser (1) into said laser-active crystal (14) with polarization-dependent reflection and transmission.

9. The device as set forth in any of the claims 1 to 8, **characterized in that** multiple diode lasers (1) are provided which beam the light of said pump radiation (2) leaving them onto said laser-active crystal (14), and **in that** at least one resonator mirror (30, 31 or 32) is provided in order to beam said pump radiation (2) onto said laser-active crystal (14).

10. The device as set forth in any of the claims 1 to 8, **characterized in that** said second end face (14b) of said laser-active crystal (14) is assigned a reflector (52) which reflects the unabsorbed pump radiation (50) injected through said first end face (14a) and injects it into said second end face (14b) as reflected pump radiation (54).

11. The device as set forth in claim 10, **characterized in that** said laser-active crystal (14) has doping and a length which are selected so that less than 70% of said pump radiation (2) can be absorbed in said laser-active crystal (14) after entering through said first end face (14a).

12. The device as set forth in claim 11, **characterized in that** approximately 50 to 60% of said pump radiation (2) can be absorbed in said laser-active crystal (14) after entering through said first end face (14a).

13. The device as set forth in any of the claims 1 to 8, **characterized in that** a laser oscillator (70) is provided which generates an output beam (71), and **in that** said output beam (71) can be injected into said laser-active crystal (14) at least via said first or second end face (14a or 14b) to pass through said laser-active crystal (14) and generate a beam (72) with higher output power.

14. The device as set forth in claim 13, **characterized in that** provided between imaging optics (12) for said pump beam (2) and said first end face (14a) is an input mirror (74) for said output beam (71) which injects said output beam (71) into said laser-active crystal (14).

15. A method for the optical excitation of laser-active crystals with a diode laser (1), said laser-active crystal (14) being arranged in a solid-state laser or solid-state laser amplifier, **characterized by** the following steps:
- spatially shaping pump radiation (2) generated by said diode laser (1) with an optical element (4), said shaped pump radiation (2) having a polarization direction, and
- beaming onto a laser-active crystal (14) which has an axis C with strong absorption and an axis A with weak absorption, so that said polarization direction of said pump radiation (2) is oriented parallel to said weak-absorption axis A of said laser-active crystal (14).

16. The method as set forth in claim 15, **characterized in that** said laser-active crystal (14) and said polarization direction of said pump radiation (2) are aligned relative to each other so that said weak-absorption axis A of said laser-active crystal (14) is parallel to said polarization direction.

17. The method as set forth in claim 15, **characterized in that** said laser-active crystal (14) has at least a first and a second end face (14a, 14b) which have a polarization-dependent transmission, and **in that** said polarization direction of said pump radiation (2) is oriented so that the reflection losses at said first or second end faces (14a, 14b) are minimal and the optical power which enters said laser-active crystal (14) is maximal.

18. The method as set forth in claim 15, **characterized in that** said solid-state laser or solid-state laser amplifier comprises a laser resonator (27) with a multiplicity of mirrors (28, 29, 30), the surfaces of which are provided with polarization-dependent transmission, and **in that** said polarization direction of said pump radiation (2) is oriented so that the reflection losses at these surfaces are minimal and the optical power which enters said laser-active crystal (14) is maximal.

19. The method as set forth in claim 15, **characterized in that** said laser-active crystal (14) consists of Nd:YVO₄, Nd:GdVO₄, Nd:LSB, Nd:YAlO₃, Nd:YLF or Nd:BEL.

20. The method as set forth in any of the claims 15 to 19, **characterized in that** said laser-active crystal (14) consists of Nd:YVO₄ with neodymium doping in excess of 0.5% (at.).

21. The method as set forth in any of the claims 15 to 20, **characterized in that** the light of said pump radiation (2) from a plurality of diode lasers (1) is beamed onto said laser-active crystal (14), and **in that** at least one resonator mirror (31, 32 or 33) is provided in order to beam said pump radiation (2) onto said laser-active crystal (14).

22. The method as set forth in any of the claims 15 to 20, **characterized in that** pump radiation (2) emerging from said second end face (14b) of said laser-active crystal (14) is reflected by a reflector (52), and re-enters said laser-active crystal (14) as reflected pump radiation (54) through said second end face (14b).

23. The method as set forth in claim 22, **characterized in that** said laser-active crystal (14) has doping and a length which are selected so that less than 70% of said pump radiation (2) can be absorbed in said laser-active crystal (14) after entering through said first end face (14a).

24. The method as set forth in claim 23, **characterized in that** approximately 50 to 60% of said pump radiation (2) is absorbed in said laser-active crystal (14) after entering through said first end face (14a).

25. The method as set forth in any of the claims 15 to 20, **characterized in that** an output beam (71) is generated by a laser oscillator (70), and **in that** said output beam (71) is injected into said laser-active crystal (14) at least via said first or second end face (14a or 14b) and passes through it at least once, while generating a beam (72) with higher output power.

26. The method as set forth in claim 25, **characterized in that** provided between imaging optics (12) for said pump beam (2) and said first end face (14a) is an input mirror (74) for said output beam (71) which injects said output beam (71) into said laser-active crystal (14).

## Revendications

1. Dispositif pour l'excitation optique de cristaux actifs au laser au moyen d'un laser à diode (1) qui génère un rayonnement de pompage (2), le cristal actif au laser étant agencé dans un laser à corps solide ou dans un amplificateur de laser à corps solide et le cristal actif au laser présentant un axe C à forte absorption et un axe A à faible absorption, **caractérisé en ce qu'**il est prévu en aval du laser à diode (1) un élément optique (4) pour obtenir un formage dans l'espace du rayonnement de pompage du laser à diode (1), et **en ce que** le rayonnement de pompage (2) du laser à diode est de polarisation linéaire très largement dans une direction de polarisation déterminée, et **en ce que** lors de l'incidence dans le cristal (14) actif au laser, la direction de polarisation du rayonnement de pompage (2) est orientée parallèlement à l'axe A à faible absorption du cristal (14) actif au laser.

2. Dispositif selon la revendication 1, **caractérisé en ce que** le cristal (14) actif au laser présente au moins une première et une seconde surface frontale (14a, 14b) qui possède une transmission fonction de la polarisation, et **en ce que** la direction de polarisation du rayonnement de pompage (2) est orientée de telle sorte que les pertes de réflexion sur la première ou sur la seconde surface frontale (14a, 14b) sont minimales et que la puissance lumineuse pénétrant dans le cristal (14) actif au laser est maximale.

3. Dispositif selon la revendication 1, **caractérisé en ce que** le laser à corps solide ou l'amplificateur de laser à corps solide comprend un résonateur à laser (27) comportant une multitude de miroirs (28, 29, 30) dont les surfaces sont munies d'une transmission fonction de la polarisation, et **en ce que** la direction de polarisation du rayonnement de pompage (2) est orientée de telle sorte que les pertes de réflexion sur ces surfaces sont minimales et que la puissance lumineuse pénétrant dans le cristal (14) actif au laser est maximale.

4. Dispositif selon la revendication 1, **caractérisé en ce que** le cristal (14) actif au laser est constitué de Nd:YVO₄, Nd:GdVO₄, Nd:LSB, Nd:YAlO₃, Nd:YLF ou Nd:BEL.

5. Dispositif selon l'une des revendications 1 à 4, **caractérisé en ce que** le cristal (14) actif au laser est constitué de Nd:YVO₄ avec un dopage de néodyme de plus de 0,5 atomes-%.

6. Dispositif selon la revendication 1, **caractérisé en ce que** l'élément optique (4) est réalisé sous la forme d'éléments micro-optiques.

7. Dispositif selon la revendication 1, **caractérisé en ce que** l'élément optique (4) est réalisé sous la forme d'un guide d'ondes maintenant la polarisation pour obtenir un formage dans l'espace du rayonnement de pompage (2) du laser à diode (1), le guide d'ondes maintenant la polarisation étant constitué par exemple de barreau de verre ou d'une fibre optique.

8. Dispositif selon la revendication 1, **caractérisé en ce qu'**un moyen de couplage (25) est agencé dans le résonateur à laser (27), qui injecte dans le cristal (14) actif au laser le rayonnement de pompage (2) du laser à diode (1) avec réflexion et avec transmission fonction de la polarisation.

9. Dispositif selon l'une des revendications 1 à 8, **caractérisé en ce qu'**il est prévu plusieurs lasers à diode (1) qui injectent la lumière qu'ils émettent du rayonnement de pompage (2) vers le cristal (14) actif au laser, et **en ce qu'**il est prévu au moins un miroir de résonateur (30, 31 ou 32) pour injecter le rayonnement de pompage (2) sur le cristal (14) actif au laser.

10. Dispositif selon l'une des revendications 1 à 8, **caractérisé en ce qu'**à la seconde surface (14b) du cristal (14) actif au laser est associé un réflecteur (52) qui réfléchit le rayonnement de pompage injecté par la première surface frontale (14a) et non absorbé et qui l'injecte à titre de rayonnement de pompage réfléchi (54) dans la seconde surface frontale (14b).

11. Dispositif selon la revendication 10, **caractérisé en ce que** le cristal (14) actif au laser présente un dopage et une longueur choisis de manière à ce que moins de 70 % du rayonnement de pompage (2) sont susceptibles d'être absorbés dans le cristal (14) actif au laser après entrée à travers la première surface frontale (14a).

12. Dispositif selon la revendication 11, **caractérisé en ce qu'**environ 50 à 60 % du rayonnement de pompage (2) sont susceptibles d'être absorbés dans le cristal (14) actif au laser après entrée à travers la première surface frontale (14a).

13. Dispositif selon l'une des revendications 1 à 8, **caractérisé en ce qu'**il est prévu un oscillateur à laser (70) qui génère un faisceau de sortie (71), et **en ce que** le faisceau de sortie (71) est susceptible d'être couplé dans le cristal (14) actif au laser au moins via la première ou via la seconde surface frontale (14a ou 14b) pour traverser le cristal (14) actif au laser et pour générer un faisceau (72) de puissance de sortie plus élevée.

14. Dispositif selon 1 revendication 13, **caractérisé en ce qu'**il est prévu entre une optique d'imagerie (12) pour le faisceau de pompage (2) et la première surface frontale (14a) un miroir de couplage (74) pour le faisceau de sortie (71), qui couple le faisceau de sortie (71) dans le cristal (14) actif au laser.

15. Procédé pour l'excitation optique de cristaux (14) actifs au laser au moyen d'un laser à diode (1), le cristal (14) actif au laser étant agencé dans un laser à corps solide ou dans un amplificateur de laser à corps solide, **caractérisé par** les étapes suivantes :
- formage dans l'espace d'un rayonnement de pompage (2), généré par le laser à diode (1), au moyen d'un élément optique (4), le rayonnement de pompage formé (2) présentant une direction de polarisation, et
- injection sur un cristal (14) actif au laser qui présente un axe C à forte absorption et un axe A à faible absorption, de telle sorte que la direction de polarisation du rayonnement de pompage (2) est orientée parallèlement à l'axe A à faible absorption du cristal (14) actif au laser.

16. Procédé selon la revendication 15, **caractérisé en ce que** le cristal (14) actif au laser et la direction de polarisation du rayonnement de pompage (2) sont orientés l'un par rapport à l'autre pour que l'axe A à faible absorption du cristal (14) actif au laser soit parallèle à la direction de polarisation.

17. Procédé selon la revendication 15, **caractérisé en ce que** le cristal (14) actif au laser présente au moins une première et une seconde surface frontale (14a, 14b) qui possède une transmission fonction de la polarisation, et **en ce que** la direction de polarisation du rayonnement de pompage (2) est orientée de telle sorte que les pertes de réflexion sur la première ou sur la seconde surface frontale (14a, 14b) sont minimales et que la puissance lumineuse pénétrant dans le cristal (14) actif au laser est maximale.

18. Procédé selon la revendication 15, **caractérisé en ce que** le laser à corps solide ou l'amplificateur de laser à corps solide comprend un résonateur à laser (27) comportant une multitude de miroirs (28, 29, 30) dont les surfaces présentent une transmission fonction de la polarisation, et **en ce que** la direction de polarisation du rayonnement de pompage (2) est orientée de telle sorte que les pertes de réflexion sur ces surfaces sont minimales et que la puissance lumineuse pénétrant dans le cristal (14) actif au laser est maximale.

19. Dispositif selon la revendication 15, **caractérisé en ce que** le cristal (14) actif au laser est constitué de Nd:YVO₄, Nd:GdVO₄, Nd:LSB, Nd:YAlO₃, Nd:YLF ou Nd:BEL.

20. Procédé selon l'une des revendications 15 à 19, **caractérisé en ce que** le cristal (14) actif au laser est constitué de Nd:YVO₄ avec un dopage de néodyme de plus de 0,5 atomes-%.

21. Procédé selon l'une des revendications 15 à 20, **caractérisé en ce que** la lumière du rayonnement de pompage (2) de plusieurs lasers à diodes (1) est injectée sur le cristal (14) actif au laser, et **en ce que** pour l'injection du rayonnement de pompage (2) sur le cristal (14) actif au laser, il est prévu au moins un miroir de résonateur (31, 32 ou 33).

22. Procédé selon l'une des revendications 15 à 20, **caractérisé en ce que** le rayonnement de pompage (52) sortant de la seconde surface frontale (14b) du cristal (14) actif au laser est réfléchi par un réflecteur (52) et rentre sous forme de rayonnement de pompage réfléchi (54) de nouveau dans le cristal (14) actif au laser à travers la seconde surface frontale (14b).

23. Procédé selon la revendication 22, **caractérisé en ce que** le cristal (14) actif au laser présente un dopage et une longueur choisis de manière à ce que moins de 70 % du rayonnement de pompage (2) sont susceptibles d'être absorbés dans le cristal (14) actif au laser après entrée à travers la première surface frontale (14a).

24. Procédé selon la revendication 23, **caractérisé en ce qu'**environ 50 à 60 % du rayonnement de pompage (2) sont susceptibles d'être absorbés dans le cristal (14) actif au laser après entrée à travers la première surface frontale (14a).

25. Procédé selon l'une des revendications 15 à 20, **caractérisé en ce qu'**un oscillateur à laser (70) génère un faisceau de sortie (71), et **en ce que** le faisceau de sortie (71) est susceptible d'être injecté dans le cristal (14) actif au laser au moins via la première ou via la seconde surface frontale (14a ou 14b) pour traverser au moins une fois ledit cristal en générant un faisceau (72) de puissance de sortie plus élevée.

26. Procédé selon la revendication 25, **caractérisé en ce qu'**il est prévu entre une optique d'imagerie (12) pour le faisceau de pompage (2) et la première surface frontale (14a) un miroir de couplage (74) pour le faisceau de sortie (71), qui couple le faisceau de sortie (71) dans le cristal (14) actif au laser.
